# EUROPEAN PATENT SPECIFICATION

(11) **EP 0 416 663 B1**
(45) Date of publication and mention of the grant of the patent: **11.02.1998**
(21) Application number: 90117393.0
(22) Date of filing: 10.09.1990
(51) Int. Cl.: G11B 20/00, G11B 20/10

(54) **Data recording apparatus**
Daten-Aufzeichnungsgerät
Appareil d'enregistrement de données

(30) Priority: 08.09.1989 JP 233233/89; 14.09.1989 JP 238525/89
(43) Date of publication of application: 13.03.1991
(73) Proprietor: MATSUSHITA ELECTRIC INDUSTRIAL CO., LTD., Kadoma-shi, Osaka-fu, 571 (JP)
(72) Inventor: Ejima, Naoki, Hirakata-shi, Osaka (JP); Kawamoto, Kinji, Yawata-shi, Kyoto (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 297 242
- EP-A- 0 328 141
- WO-A-86/05057
- JP-A-85 272 995
- US-A- 4 775 901
- PATENT ABSTRACTS OF JAPAN vol. 13, no. 185 (P-865)(3533) 2 May 1989 & JP-A-1 013 260
- PATENT ABSTRACTS OF JAPAN vol. 13, no. 185 (P-865)(3533) 2 May 1989 & JP-A-1 013 261

## Description

This invention relates to a data recording apparatus of the kind as defined in the preamble of claim 1.

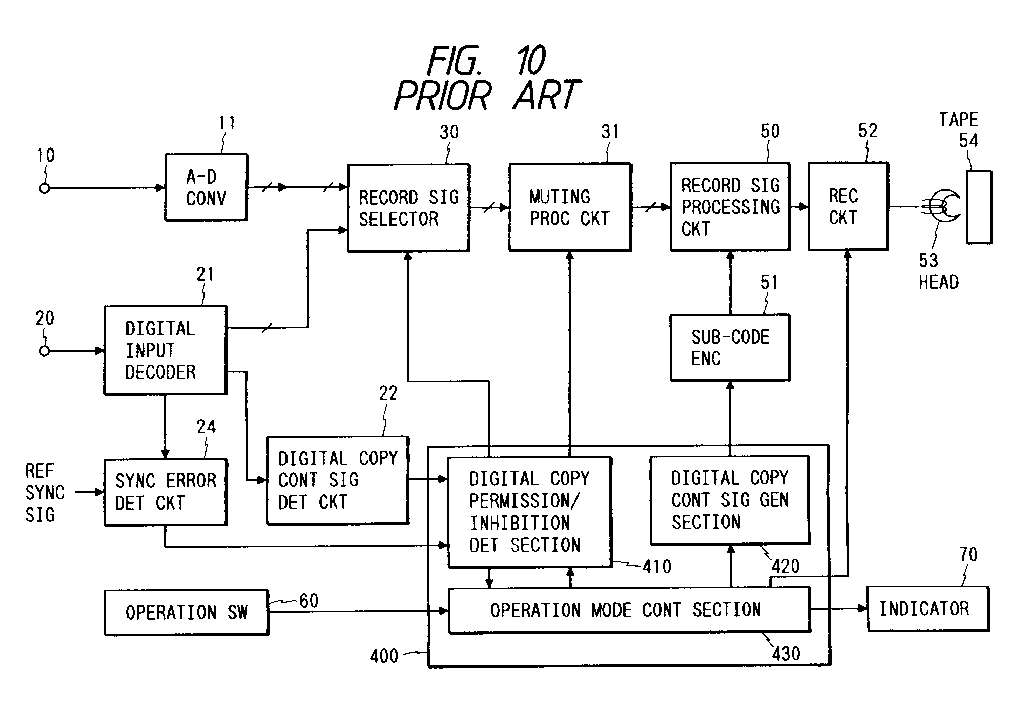

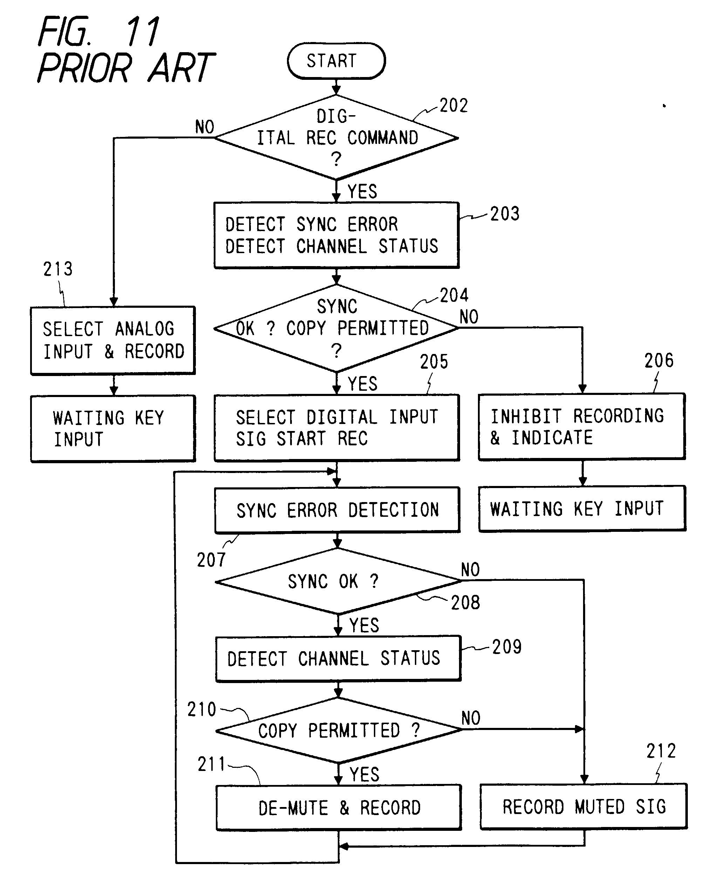

Such a data recording apparatus capable of selectively recording digital and analog audio signals is known from a product of Matsushita electric industry corp. (model number; SV-D1000) which has been sold since 1987 as a digital · audio · tape recorder (hereinbelow also referred to as DAT). Fig. 10 is a block diagram of this DAT. In Fig. 10, numeral 11 is an A/D converter. Numeral 21 is a digital input decoder for decoding a digital input signal, from a terminal 20, specified by a standard (IEC-958) of a digital audio interface to produce digital audio and sub-code signals. Numeral 22 is a digital copy control signal detection circuit for detecting a digital copy control signal included in the sub-code signal. Numeral 24 is a synchronizing error detection circuit for detecting errors in bit synchronizing or frame synchronizing. Numeral 30 is a record signal selector for selecting either output signal of the A/D converter 11 or an output signal of the digital input decoder 21. Numeral 31 is a muting processing circuit for muting the record signal. Numeral 400 is a system controlling section for controlling operation of the system. The system controlling section 400 comprises a microprocessor for controlling the whole system through communication through its input and output ports with peripheral circuits and logical calculation processing therein. The structure of the microprocessor (mpu) is well-known, thus, the detailed description is omitted. Fig. 11 shows a flow chart showing flows of controlling operation of the prior art DAT shown in Fig. 10. A program stored in the system controlling section 400 is provided such that the system controlling section 400 operates in accordance with the flow chart of Fig. 11. Numeral 410 included in the system controlling section 400 is a permission/inhibition determination section for making determination as to permission/inhibition of digital copying in accordance with the digital copy controlling and synchronizing error detection signals. Numeral 420 is a digital copying recording controlling signal generation section included in the system controlling section for generating a digital controlling signal to be recorded on the recording medium. Numeral 51 is a sub-code encoder for converting the digital copy controlling signal into a sub-code formatted signal. Numeral 50 is a record signal processing circuit for converting the audio digital and sub-code signals into a record format signal. Numeral 52 is a recording circuit. Numeral 53 is a head. Numeral 54 is a magnetic tape. Numeral 60 is a operation switch. Numeral 70 is an indicator.

Operation of the prior art data recording apparatus having the above-mentioned structure will be described with reference to Fig. 11 showing operation. Fig. 11 shows a flow chart of controlling operation of the system controlling section 400. When a command for digital copy mode is made by the operation switch 60 (step 202), an operation mode controlling section 430 included in the system controlling section 400 controls the record signal selector 30 to select the digital input signal from the terminal 20. At the same time, the mpu detects synchronizing condition and determines permission/inhibition digital copying. If the result shows "permission", it causes the recording circuit 52 to be in recording condition (step 205) from the digital copy control signal. If the result shows "inhibition", it prevents the recording circuit 52 to be in the recording condition and indicates "digital copying is forbidden" and provides flickering indication to promote some counter operation (step 206).

Hereinbelow will be described condition detection after it enters a digital copy recording mode (step 205) and operation thereof. After start of recording (step 205) with selection of the digital input signal, mpu detects synchronizing error and digital copy controlling signal (steps 207 and 209). If synchronizing is not in error and the digital copy controlling signal indicates permission of copying, the mpu maintains the digital copy operation (step 211). If synchronizing is in error and the digital copy controlling signal indicates inhibition of copying, it controls the muting processing circuit 31 so that a muted signal is recorded (step 211).

An error in synchronizing may occur because the receiving side cannot respond the change of the sampling frequency when a sampling frequency of the digital signal is changed. For example, when a satellite broadcasting signal is received directly, a synchronizing error occurs when the mode is changed between A and B. This is because sampling frequencies of A and B modes are different from each other. Then, for the synchronizing error interval, the muted signal is recorded. Further, if the number of generations of copies permitted is specified and is recorded on a recording medium for protecting copyright, and when this magnetic tape is reproduced, the digital copying controlling signal may change from permission to inhibition of digital copying. Thus, if copying is carried out from such a magnetic tape to other magnetic tape, some portion of another magnetic tape includes muted portions so that the copied tape becomes different from what the operator intended to make. In other words, the recorded program is not continuous.

According to the above-mentioned prior art, the operator can carry out digital copying if the operator knows that the input signal is one permitted for digital copying. However, if the operator does not know such information, once the operator tries to set the digital copy mode and record he is informed of permission or inhibition of digital copying. As mentioned, it is very inconvenient that the operator does not know whether digital copying is permitted or not when he records the digital audio input signal by the DAT because there are digital audio signals for which digital copy is permitted and not permitted. This inconvenience has been reduced as follows:

If an analog signal is available from the same source, which includes the same content as the digital audio signal includes, the analog signal is supplied to the analog signal input terminal 10 and then the apparatus is changed into analog recording mode in response to the operation switch 60. Then the content can be copied using the analog signal in stead of the digital signal. Further, if synchronizing becomes in error during digital copying or a control signal indicative of inhibition of digital copying occurs during digital copying, a muted signal is recorded and an alarm is displayed. In response to this, the operator temporally stops recording and then he changes the apparatus into the analog recording mode with the operation switch 60, so that he can copy the analog signal including the content as the same as the digital audio signal including. However, it is inconvenient that the operator should monitor the recording condition continuously to change the signal for recording and to direct the operation mode again to the apparatus. Further a portion in the recording is missing due to the interruption, i.e. sound or the program recorded on the magnetic tape is incontinuous.

This invention provides data apparatus for maintaining copy operation even if a condition of a digital input signal changes during digital copying.

A data recording apparatus of the kind as defined in the preamble of claim 1 is disclosed in JP-A-1 013 260. With this known apparatus an analog input signal is filtered by a low pass filter and then converted into a digital signal by an A/D converter. A digital input signal is converted into the same format as the output of the A/D converter by a digital signal conversion part. The output of the A/D converter and the output of the digital signal conversion part are connected to different terminals of a shifting switch. The digital signal conversion part is further provided for the separation of an inhibit signal in the digital input signal. The separated inhibit signal is fed to a microcomputer for carrying out a copy prohibit signal detection function. The switch is controlled by the microcomputer so that the output of the digital signal conversion part is selected in a normal state, whereas the output of the A/D converter is selected in a prohibition state. Thus, the output signal can be recorded continuously by a recording part connected to the output of the switch via a signal processing part.

Further measures to combat the problem of pirate copying of video signals, audio signals and the like are disclosed in EP-A-0 297 242 and WO-A-86/05057. In the EP-A-0 297 242 the copy protection is provided by means of an identification signal recorded on the recording medium. In the WO-A-86/05057 the security against copying is achieved by modifying the synchronisation signals such that, on the one hand, if reproduction is attempted synchronisation is lost but, on the other hand, such that the modifications of the synchronisation signals still allow problem-free reproduction.

JP-A-1 013 261 discloses a digital recording device wherein the level of an input analog signal is optimized by controlling a level adjusting means while comparing a digital signal from an A/D converter with an input digital signal, containing a reference signal. A compact disk can be used as an input source. An analog signal and the digital signal are simultaneously output by this input source. A signal is adjusted be forehand to an optimum level and is reproduced by a test desk in order to generate the reference signal. It is further fed to a digital comparator via a digital interface. The analog signal adjusted by a level adjuster is converted by the A/D converter into the digital signal and fed to the comparator. The comparator repeats comparing and adjusting until the levels of the two signals coincide with each other. When the levels coincide, the adjusting means is fixed and the analog signal is digitized at the optimum level and is recorded by a rotary magnetic head device via a switching circuit, a digital signal processing circuit and a high frequency amplifier.

As stated above the JP-A-1 013 260 teaches how to avoid interruptions of recording in cases of copy inhibit. It is the object of the present invention to ensure continuous and good recording also under the condition that the input digital data signal is not suitable for recording for other reasons.

This object is achieved with a data recording apparatus as specificed in claim 1.

Preferred embodiments of the invention are defined in the dependent claims.

### BRIEF DESCRIPTION OF THE DRAWINGS

The object and features of the present invention will become more readily apparent from the following detailed description taken in conjunction with the accompanying drawings in which:
Fig. 1 is a block diagram showing a first embodiment of a data recording apparatus of the invention;
Fig. 2 shows a flow chart showing flows of controlling operation of the data recording apparatus of embodiments throughout the specification;
Fig. 3 shows interconnection between this apparatus and external apparatus, which is suited for embodiments throughout the specification.
Fig. 4 is a block diagram of polarity changing circuit shown in Figs.1, 8, and 9;
Fig. 5A is a block diagram of the signal correlation circuit 84 of embodiments throughout the specification;
Fig. 5B shows a block diagram of the peak detectors shown in Fig. 5A;
Fig. 5C is a block diagram of the time difference detector shown in Fig. 5A;
Fig. 6 is a block diagram showing the second embodiment of the invention;
Fig. 7 is a block diagram showing the third embodiment of the invention of the data recording apparatus;
Fig. 8 is a block diagram showing the fourth embodiment of the invention of the data recording apparatus;
Fig. 9 is a block diagram showing the fifth embodiment of the invention of data recording apparatus;
Fig. 10 is a block diagram of data recording apparatus of a prior art; and
Fig. 11 shows a flow chart used in the prior art of Fig. 10.

The same or corresponding elements or parts are designated at like references throughout the drawings.

### DETAILED DESCRIPTION OF THE INVENTION

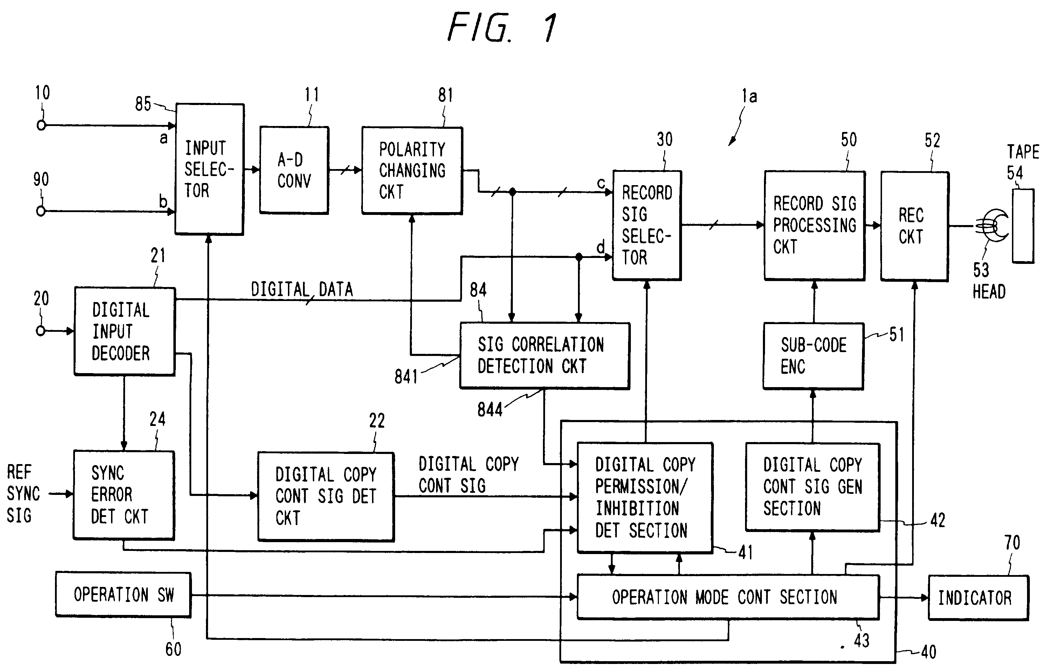

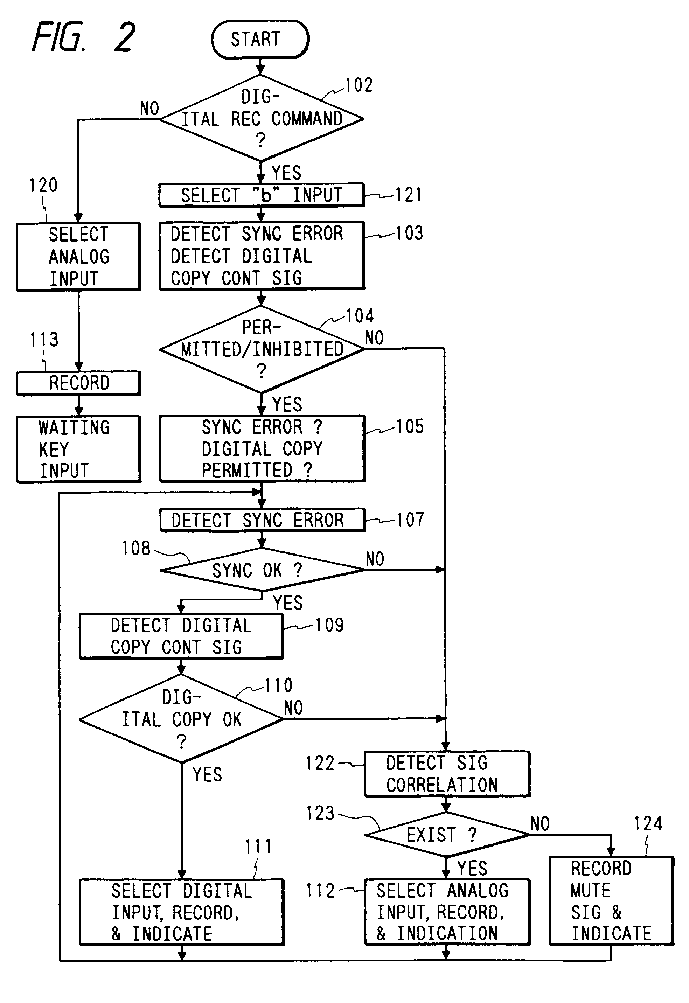

Fig. 1 is a block diagram showing a first embodiment of the data recording apparatus of the invention. Fig. 2 shows a flow chart showing flows of controlling operation of the DAT shown in Fig. 1 of the embodiment of the invention. In Fig. 1, an analog audio input signal is applied to "a" input of an auxiliary input selector 85 through a terminal 10. Another analog audio input signal is also applied to "b" input of the input selector 85 through a terminal 90. The auxiliary input selector 85 selects either analog audio signals in response to a system controlling section 40. An output of the auxiliary input selector 85 is sent to an A/D converter 11.

A digital audio input signal from a terminal 20, specified by a standard (IEC-958) of a digital audio interface in the IEC standards, is applied to the digital input decoder 21 for producing digital input, sub-code, and synchronizing signals. An output signal of the digital input decoder 21, i.e., sub-code data is sent to a digital copy control signal detection circuit 22 for detecting a digital copy control signal included in the sub-code signal. The synchronizing signal is sent to a synchronizing error detection circuit 24 for detecting errors in bit synchronizing or frame synchronizing by comparison between said synchronizing signal and a reference synchronizing signal.

An output of the A/D converter 11 is sent to the "c" input of a record signal selector 30 through a polarity changing circuit 81 mentioned latter. Another input "d" of the record signal selector 30 is supplied with an output of the digital input decoder. The record signal selector 30 selects either the output signal of the A/D converter 11 or the output signal of the digital input decoder 21, i.e., digital data. An output signal of the record signal selector 30 is recorded on a magnetic tape 54 through a record signal processing circuit 50 for formatting the audio digital signal for recording together with sub-code from a sub-code encoder 51, through a recording circuit 52, and through a head 53. The digital copy control signal detected by the digital copy control signal detection circuit 22 is sent to a system controlling section 400.

The polarity changing circuit 81 changes polarity of the output signal of the A/D converter 11. It changes polarity relation between the output of the A/D converter 11 and the digital data. Numeral 84 is a signal correlation detection circuit for detection difference between the output of A/D converter and the digital data in polarity, magnitude, and phase for generating a polarity control signal 841 and a correlation detection signal 844.

The system controlling section 40 comprises a microprocessor (mpu) for controlling the whole system through communication through its input and output ports with peripheral circuits and logical calculation processing therein. The structure of the microprocessor (mpu) is well-known, thus, the detailed description is omitted. Fig. 2 shows a flow chart showing flows of controlling operation of the first embodiment which is common to embodiments through the specification. A program stored in the system controlling section 40 is provided such that the system controlling section 40 operates in accordance with the flow chart of Fig. 2. Numeral 41 included in the system controlling section 40 is a permission/inhibition determination section for making determination as to permission/inhibition of digital copying in accordance with the digital copy controlling and synchronizing error detection signals. Numeral 42 is a digital copying recording controlling signal generation section included in the system controlling section for generating a digital controlling signal to be recorded on the recording medium. Numeral 51 is a sub-code encoder for converting the digital copy controlling signal into a sub-code formatted signal. Actually, the mpu executes a program of flow chart in Fig. 2 for performing functions of the digital copy permission/inhibition determination section 41, digital copy recording control signal generation section 42, and the operation mode controlling section 43. Numeral 60 is a operation switch. Numeral 70 is an indicator.

Hereinbelow will be described operation of digital copying in the above-mentioned data recording apparatus.

When an operator sets the apparatus to be in the digital copy mode with the operation switch 60 (step 102), the system controlling section 40 sends a control signal to the auxiliary input selector 85 so that the auxiliary input selector 85 selects a signal coming from the auxiliary analog input terminal 90 (step 121). Moreover, the system controlling section 40 controls the record signal selector 30 to select the digital input signal (step 121). Then, the system controlling section 40 detects outputs of the digital copy control signal detection circuit 22 and the synchronizing error detection circuit 24 (step 103) to determine synchronizing condition and permission/inhibition of digital copying (step 104). If the answer is "permission", the system controlling section 40 turns the recording circuits into recording condition (step 105). If the answer is "inhibition", processing proceeds to step 122 where the system controlling section 40 checks an output of the signal correlation detection circuit 84 to detect correlation (step 123). If there is correlation, it controls the recording signal selector 30 to change signal selection from the digital input to the analog input signal. Thus, the signal being recorded is switched to the signal from the auxiliary analog input terminal 90 (step 112). In addition to this operation, indications of substitution recording is executed in step 112, as well as information whether there is synchronizing error or not and digital copying is permitted or inhibited is made by the indicator 70 to arouse the operator's attention. Therefore, even if the apparatus is set to the digital copying mode, it can record the input signal coming from the auxiliary analog input terminal 90, converted into a digital signal by the A/D converter 11.

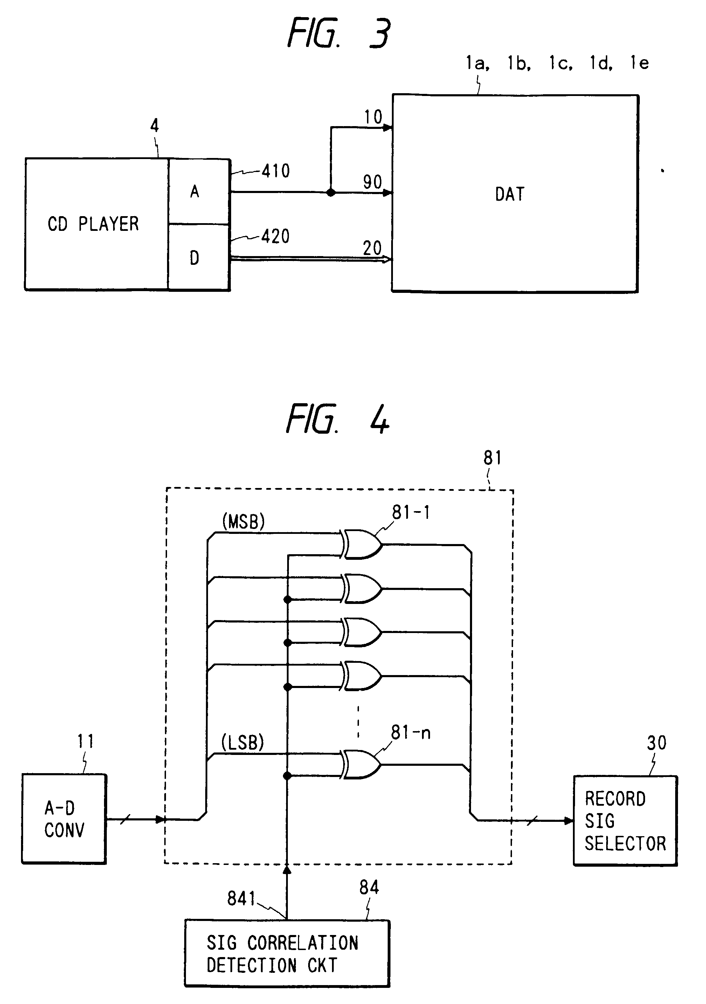

Fig. 3 shows interconnection between this apparatus and an external apparatus, which is suited for embodiments throughout the specification. In Fig. 3, numeral 1a, 1b, 1c, 1d, or 1e is a DAT. Numeral 4 is a CD player. Numeral 410 is an analog signal output terminal. Numeral 420 is a digital signal output terminal. The DAT is connected to the CD player, as shown in Fig. 3. Thus, both the auxiliary analog input terminal 90 and the digital signal input terminal 20 are supplied with a reproduction signal of the same CD player. Therefore, when synchronizing error or inhibition of digital copy occurs, the apparatus detects synchronizing error and inhibition of digital copy and thus, it can record the analog signal automatically replacing the digital signal.

Other flows of the flow chart in Fig. 2 will be described.

After starting recording (step 105) with the digital input selected, the apparatus executes detection of synchronizing error and of digital copy control signal ( steps 107 and 109). If synchronizing is not in error and the digital copy control signal indicates permission to copy, the apparatus maintains digital copying operation (step 111). If synchronizing is in error or the digital copy control signal indicates inhibition of digital copy (step 108), processing proceeds to step 122 where correlation is determined with the output of the signal correlation detection circuit 84 (step 123). If there is correlation, the system controlling section 40 controls the recording signal selector 30 to change signal selection from the digital input to the analog input. Even though the apparatus is in digital copy mode, the apparatus can record the signal inputted to the auxiliary analog input terminal 90 converted into digital signal by the A/D converter 11. If the apparatus is interconnected as shown in Fig. 3 and when synchronizing error or inhibition of copy during recording the digital signal occur, it can record the analog signal instead of the digital input signal automatically in response to detecting such conditions.

Moreover, analog input recording of step 112 is included in the loop of detecting the condition of the digital input decoder, so that when synchronizing error is recovered or inhibition is cancelled, the apparatus can return to the original state, i.e., the digital input recording condition (step 111). In this respect, this technique is different from the original analog input selection recording (step 113). After recovering of error or cancel of inhibition, the apparatus can return automatically to the digital copying operation whose sound quality is not deteriorated. Thus, the whole content of the program can be recorded though the digital control signal turns into inhibition of digital copying during recording when using the audio signal from a magnetic tape where the number of generations of possible digital copying is specified. This is because a portion of the content where digital copying is not permitted can be recorded using a signal from the auxiliary analog input terminal 90 via analog circuits. Thus, the problem that a muted signal is recorded in the recorded tape can be removed. Similarly, in the case of synchronizing error, the problem that recording is interrupted or a muted portion is made, is removed. Moreover, in step 112, it is possible to indicate the impossibility of digital coping and to further indicate whether synchronizing error or inhibition digital copying causes the impossibility. Thus, the operator can know the condition from these indications, so that the indication promotes a recovering operation against the trouble when synchronization error occurs.

Fig. 4 is a block diagram of the polarity changing circuit 81. In Fig. 4, the polarity changing circuit 81 comprises n EXCLUSIVE OR gates 81-1 to 81-n whose one inputs are supplied with the output of the A/D converter 11 respectively, as shown in Fig. 4. Another input of the EXCLUSIVE OR gates is supplied with the polarity control signal 841 from the signal correlation detection circuit 84. The output of the EXCLUSIVE OR gates 81-1 to 81-n are sent to the record signal selector 30. Therefore, the polarity changing circuit changes polarity of the output of the A/D converter 11 in response to the polarity signal from the signal correlation detection circuit 84.

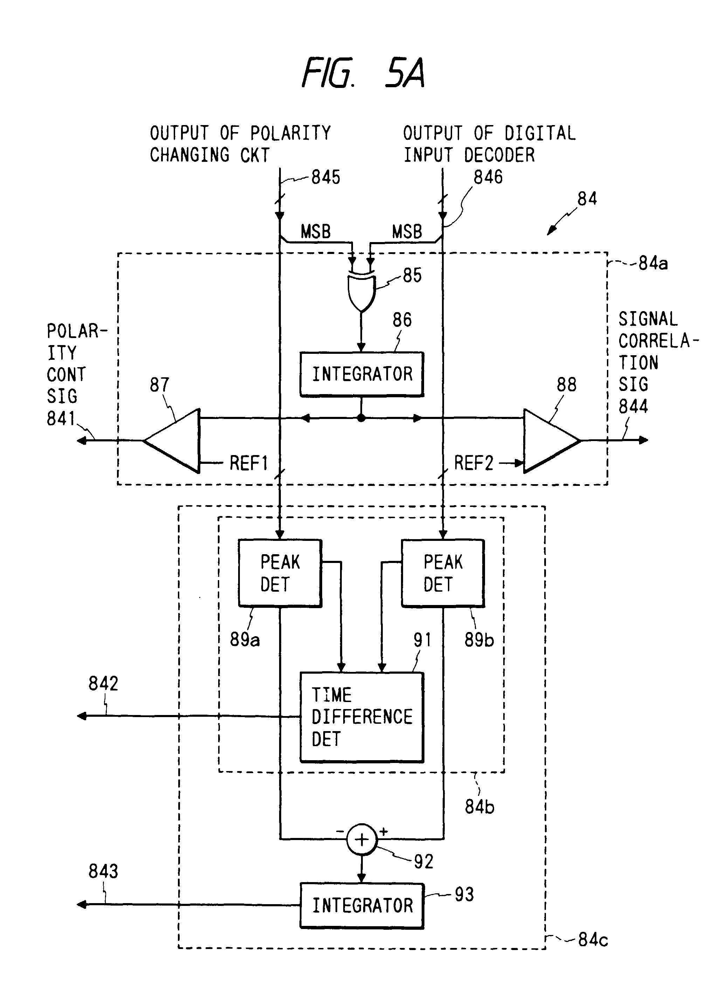

Fig. 5A is a block diagram of the signal correlation circuit 84. In Fig. 5A, the output 845 of the polarity changing circuit 81 is applied to a peak detector circuit 89a. The output of the digital input decoder is applied to another peak detector 89b. The most significant bit MSB of the output 845 is also applied to one input of an EXCLUSIVE OR gate 85 of a circuit 84a. Another input of the EXCLUSIVE OR gate 85 is supplied with the MSB of the output 846. The output of the EXCLUSIVE OR 85 is sent to an integrator 86. The output of the integrator 86 is supplied to comparators 87 and 88. The comparators 87 and 88 are supplied with reference signals REF1 and REF2 respectively. One output 841 of the circuit 84a, i.e., the polarity signal from the comparator 87 detects consistency of polarity between the outputs 845 and 846. The polarity changing circuit 81 changes polarity of its output signal in response to the polarity signal 841 to adapt polarity of its output to the output of the digital decoder 21. On the other hand, another output 844 of the circuit 84a from the comparator 88 shows correlation between the outputs 845 and 846. This is because if there is correlation of opposite polarity between outputs 845 and 846, at first, the comparator detects polarity difference and the polarity changing circuit 81 changes its polarity. Then, the comparator 88 can detect whether there is correlation between the outputs 845 and 846 or there is no correlation. If there is correlation of the polarities of outputs 845 and 846, the comparator 88 can detect whether signal correlation exists or not at once. However, there are many techniques for detecting signal correlation and it is possible to detect correlation of the same polarity and the opposite polarity at once.

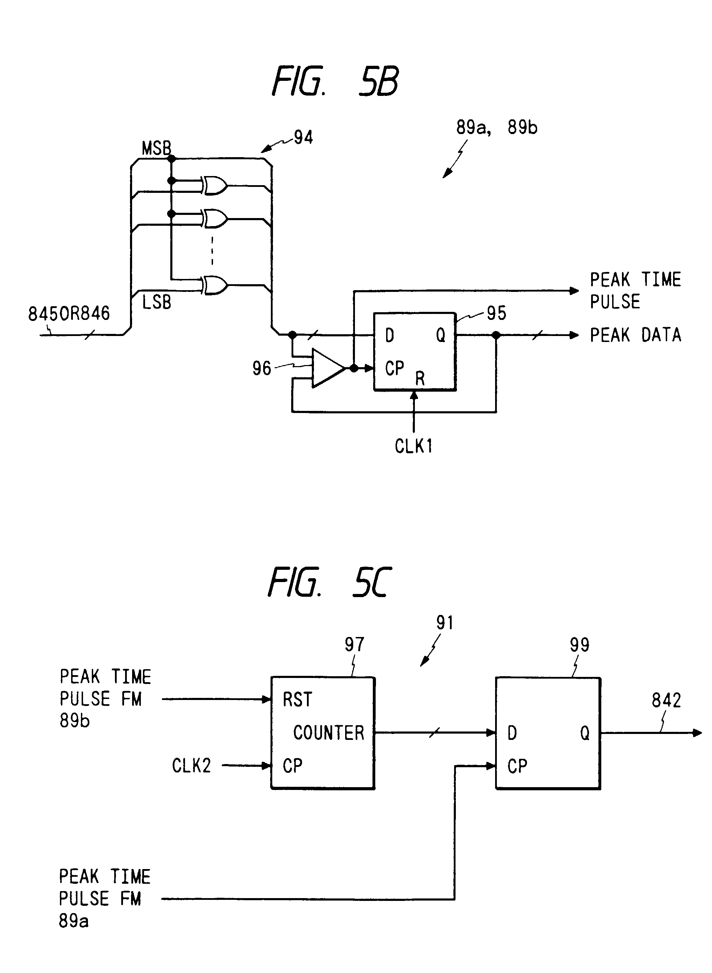

The peak detector 89a detects peak time and peak value of the output 845 to produce a peak time pulse and peak data respectively. The peak detector 89b detects peak time and peak value of the output 846 to produce a peak time pulse and peak data respectively. The peak time pulses are applied to a time difference detector 91 which detects time difference between peaks of the outputs 845 and 846. Fig. 5B shows a block diagram of the peak detectors 89a and 89b. In Fig. 5B, output 845 or 846 is supplied to n EXCLUSIVE OR gates 94 as shown, which detect an absolute value. The absolute value is sent to inputs of digital comparator 96 and D latch array 95. Another input of the digital comparator 96 is supplied with the Q output of the D latch array 95. An output of the digital comparator 96 shows the peak time pulse. The Q output of the D latch array 95 shows the peak data. A reset input of the D latch 95 is supplied with a clock signal CLK 1 for detecting the peak time pulse and the peak data within a given interval. Fig. 5C is a block diagram of the time difference detector 91. The peak time pulse from the peak detector 89a is applied to a reset input of a counter 97 whose clock pulse input is supplied with a clock CLK2. Thus, the counter starts counting in response to the peak time pulse of the peak detector 89a. An output of the counter 97 is sent to a D latch 99 whose clock pulse input is supplied with the peak time pulse from the peak time detector 89b. Thus, the Q output of the D latch 99 holds a data of the output of the counter 97 in response to the peak time pulse from the peak detector 89a. This data shows time difference between the peaks of the outputs 845 and 846.

The signal correlation signal 844 shows the signal correlation between the analog signal and the digital input signal correctly after the polarity control signal 841 is produced. Thus, the mpu 40 detects the signal correlation signal with a delay time after switching the record signal selector 30.

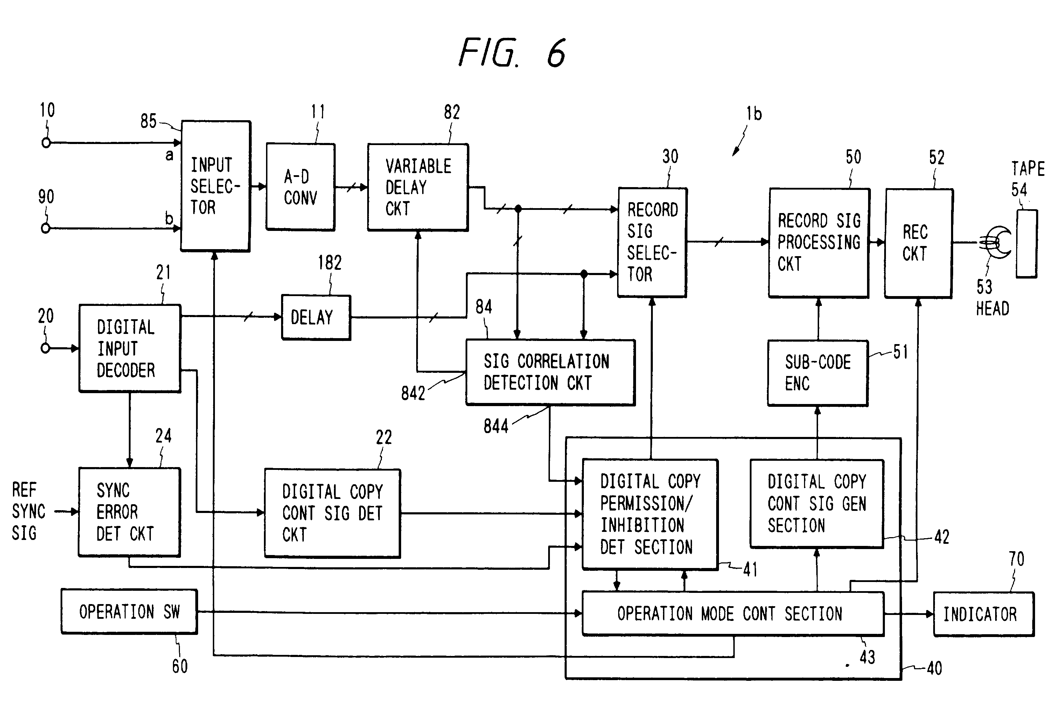

Hereinbelow will be described a second embodiment of the data recording apparatus of the invention with reference to drawings. Fig. 6 is a block diagram showing the second embodiment of the invention. Fig. 2 shows a flow chart showing controlling operation of the second embodiment also. The basic structure of the second embodiment of Fig.6 is the same as that of the first embodiment. Different points are that a variable delay circuit 82 is provided between the A/D converter 11 and the record signal selector 30, a delay circuit 182 is provided between the digital input decoder 21 and the record signal selector 30, and the polarity changing circuit 81 is omitted. Therefore, a detailed description will be omitted and different points are described mainly. The variable delay circuit 82 delays the signal from the analog input by a delay time determined by the delay control signal 842. The delay circuit 182 delays the digital audio signal from the digital decoder 21 by a given delay time. Operation of digital copying of the data recording apparatus structured as mentioned above will be described, particularly, operation of the variable delay circuit 82 will be described mainly, which is a different point from the first embodiment.

The signal correlation detection circuit 84 detects, for a given interval, time difference between an instance when the output signal of the A/D converter 11 reaches a peak value in amplitude and another instance when the output signal of the digital input decoder 21 reaches a peak value in amplitude. The signal correlation detection circuit 84 sends a delay control signal 842 to the variable delay circuit 82 in accordance with the detection signal. That is, it controls a delay time of the output signal of the A/D converter 11 such that both the signal of the A/D converter 11 and the output signal of delay circuit 182 reach the record signal selection circuit 30 at the same instance. Therefore, the unnatural variation in the output level of the record signal selection circuit 30 due to change of signal selection can be reduced. Generally, amount of delay for the analog signal is longer than that of the digital signal because there is large delay at a filter for removing distortion. Therefore, the delay circuit 182 is provided in the digital input signal line and the variable delay circuit 82 is provided in the output line of the A/D converter 11 to control delay time for time-adjusting between the digital and analog input signals. However, in order to ensure that the digital audio signal reaches the record signal selector 30 earlier than the analog audio signal, only the variable delay circuit 82 may be provided between the A/D converter 11 and the record signal selector 30.

At start of the operation the delay amount of the variable delay circuit 82 is set to the max by the delay control signal 842 to prevent that the analog audio signal reaches to the record signal selector 30 earlier than the digital audio signal.

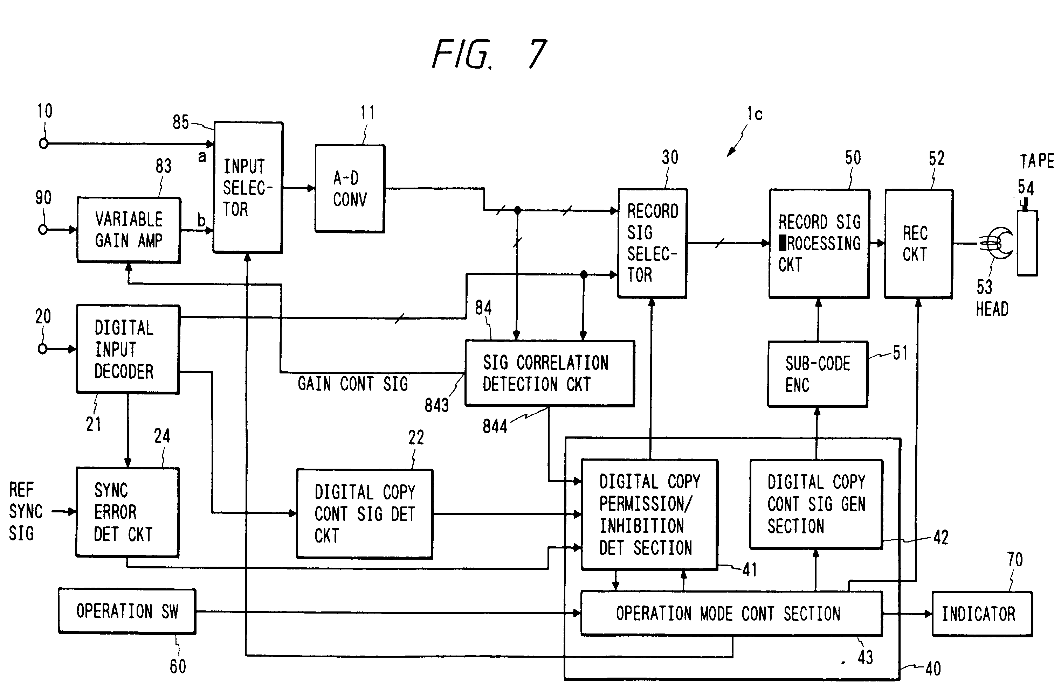

Hereinbelow will be described a third embodiment of the data recording apparatus of the invention with reference to drawings. Fig. 7 is a block diagram showing the third embodiment of the invention of data recording apparatus. Fig. 2 shows a flow chart showing controlling operation of the third embodiment of Fig. 7 also. The basic structure of the third embodiment of Fig. 7 is the same as that of the first embodiment. Different points are that a variable gain amplifier 83 is provided between the input terminal 90 and the input selector 85 and the polarity changing circuit 81 is omitted. Therefore, a detailed description will be omitted and different points are described mainly. The variable gain amplifier 83 changes gain for the analog input signal in accordance with a gain control signal 843. Operation of digital copying of the data recording apparatus structured as mentioned above will be described, particularly, operation of the variable gain amplifier will be described, which is not present in the first embodiment. The signal correlation detection circuit 84 detects peak values of the output signal of the A/D converter 11 and the output signal of the digital input decoder 21 for a given interval and compares them and detects difference in amplitude of these signals. The signal correlation detection circuit 84 sends a gain control signal 843 to the variable gain amplifier 83 in accordance with the detection result. That is, it controls the amplitude of the analog input signal such that the amplitudes of the output signal of the A/D converter 11 are made substantially equal to those of the output signal of digital signal decoder 21. Therefore, the unnatural variation in the output level of the record signal selector 30 due to change of signal selection can be reduced.

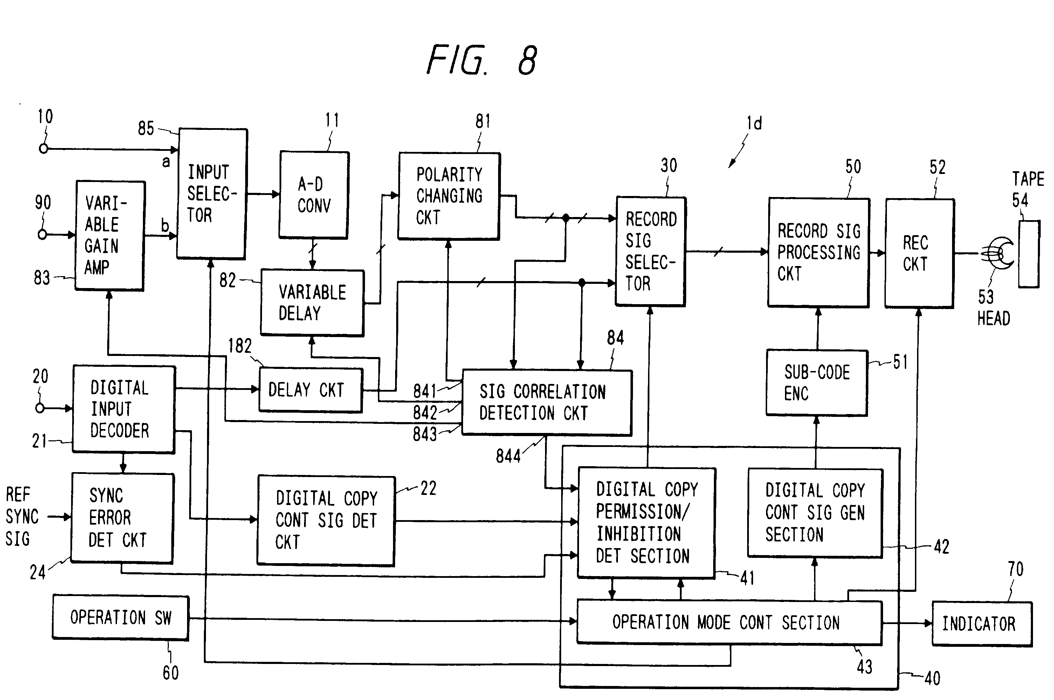

Hereinbelow will be described a fourth embodiment of the data recording apparatus of the invention with reference to drawings. Fig. 8 is a block diagram showing the fourth embodiment of the invention of data recording apparatus. Fig. 2 shows a flow chart showing controlling operation of the fourth embodiment of Fig. 8. The basic structure of the fourth embodiment of Fig. 8 is the same as that of the first embodiment. Different points are that a variable delay circuit 82 and variable gain amplifier 83 are provided. Therefore, a detailed description will be omitted. Operation of digital copying of the data recording apparatus structured as mentioned above will be described. In the fourth embodiment, in order to increase signal correlation, there are provided the polarity changing circuit 81, variable delay circuit 82 and variable gain circuit 83. The signal correlation detection circuit 84 supplies polarity control signal 841, delay control signal 842, and gain control signal 843 to control adaptively these circuits. Thus, it is possible to make the output signal of the A/D converter 11 substantially equal to the output signal of the A/D converter 21 in amplitude and in phase (delay and polarity) at the input of the record signal selector 30. Therefore, an unnatural variation in the output level of the record signal selector 30 at an instance that signal selection is changed can be reduced.

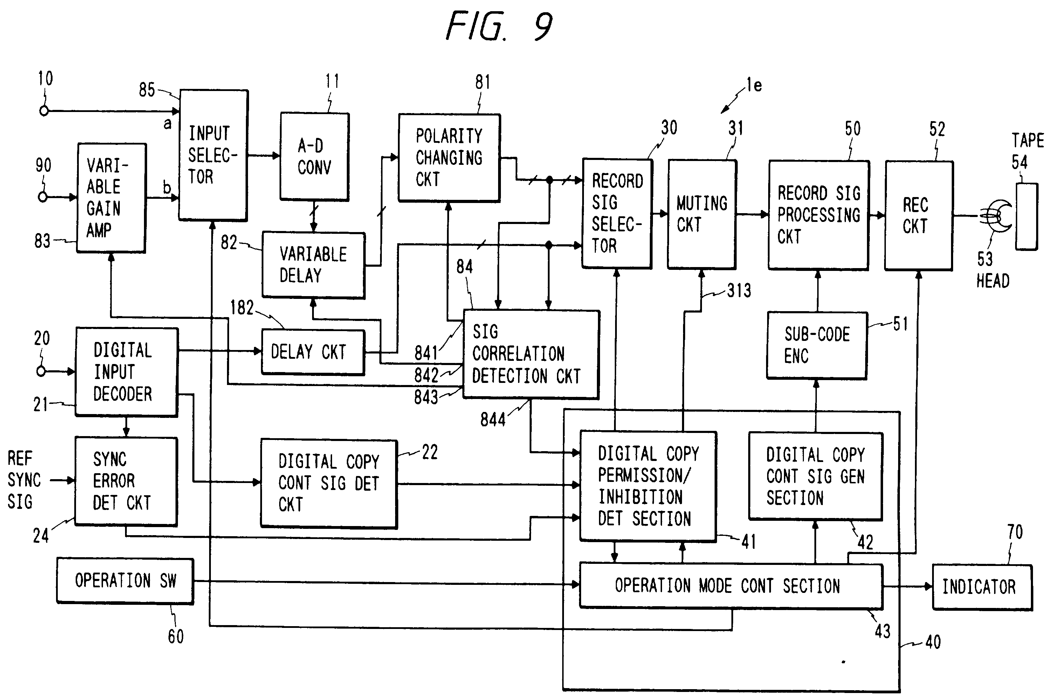

Hereinbelow will be described a fifth embodiment of the data recording apparatus of the invention with reference to drawings. Fig. 9 is a block diagram showing the fifth embodiment of the invention of data recording apparatus. Fig. 2 shows a flow chart showing controlling operation of the fifth embodiment of Fig. 9 also. The basic structure of the fifth embodiment of Fig. 9 is the same as that of the fourth embodiment. A different point is that a muting circuit 31 is provided. Therefore, a detailed description will be omitted. The muting circuit 31 replaces the record signal with a muted signal in accordance with the control signal of the system control circuit 40. Operation different from other embodiments of the data recording apparatus as structured as mentioned above for digital copy will be described. In step 122, the system control circuit 40 checks the output of the signal correlation detection circuit 84 (step 123). If it judges the output as not in correlation, it controls the muting circuit 31 so that a muted signal is recorded (step 124). That is, if the signal inputted into the auxiliary analog signal input terminal 90 is different from that inputted into the digital signal input terminal 20, it controls the muting circuit 31 to record the muted signal while these signals are inconsistent with each other. Thus, a desired program recorded on the magnetic tape 54 cannot be mixed with other programs. In step 124, in addition to this, an indication showing muted signal being recorded is made to show that substitution recording with the analog signal is not permitted or there is a problem. The operator can try again recording or can check digital signal lines or the auxiliary analog input lines. Thus, if there is no correlation, such error condition is indicated.

Other operation in addition to the embodiments mentioned above is possible. When the magnetic tape 54 recorded in the way of each embodiment is reproduced, a sub-code is recorded on the magnetic tape 54 because it is desired that a portion of the magnetic tape where analog recording is carried out can be distinguished from another portion where digital recording is carried out. Actually, the operation mode controlling circuit 43 receives a result from the digital copy permission/forbidden detection circuit 41 and sends it to the digital copy control signal generation circuit 42. Then the result is converted into a sub-code format data by the sub-code encoder 51 to supply it to the record signal processing circuit 50. The record signal processing circuit 50 produces a record signal using the main data together with the sub-code data in accordance with a record format. The record signal is recorded by the head 53 on the magnetic tape through the recording circuit. Therefore, when the recorded tape is reproduced it is possible to distinguish the portion where analog signal is recorded from another portion where digital signal is recorded. This can be utilized for indication. Such indication provides the operator history of the magnetic tape with respect to copying, so that it gives the operator useful information for operating and maintenance of the system and it removes an feeling of uneasiness and a suspicion during operation.

The system controlling is carried out using both data of the synchronizing error detection from the digital input decoder 21 and copying inhibition bit from the digital copy control signal detection circuit 22.

This invention is widely applicable to data recording apparatus being capable of recording either analog or digital signal, for example, digital video tape recorder, AV disc recorder, or digital solid-state memory recorder.

## Claims

1. A data recording apparatus comprising
a first input (90) connected to an A/D converter (11) for converting an analog input signal into a digital signal representative of the analog input signal;
a second input (20) connected to a digital decoder (21) for decoding a digital input signal to obtain a digital data signal and a synchronizing signal;
synchronizing error detection means (24) for detecting synchronizing error through comparison between said synchronizing signal and a reference synchronizing signal also supplied to the synchronizing error detection means (24);
selecting means (30) responsive to a respective control signal from a control means (40) in order to select for recording said digital data signal when no synchronizing error is detected by said synchronizing error detection means (24) and in order to prevent recording of said digital data signal when a synchronizing error is detected by said synchronizing error detection means (24) ;
characterized in that
in the presence of a synchronizing error said control means (40) is responsive to an output of said synchronizing error detection means (24) in order to automatically produce a control signal causing said selecting means (30) to select said digital signal representative of the analog input signal for recording as long as said synchronizing error is present.

2. The apparatus as claimed in claim 1,
wherein said digital decoder (21) for decoding said digital input signal also obtains a sub-code signal; and wherein the apparatus further comprises detection means (22) responsive to said sub-code signal for detecting a copy control signal indicative of permission and inhibition of recording with said digital input signal; and wherein said control means (40) is also responsive to said detected copy control signal in order to automatically produce said control signal to cause said selecting means (30) to select said digital signal representative of the analog input signal for recording as long as inhibition is detected.

3. The apparatus as claimed in claim 1 or 2, further comprising:
a) polarity difference detection means (84) for detecting polarity difference between the digital signal representative of the analog input signal and said digital data signal; and
b) polarity changing means (81) for changing polarity of said digital signal representative of the analog input signal in response to a corresponding output of said polarity difference detection means (84).

4. The apparatus as claimed in claim 1 or 2, further comprising:
a) phase difference detection means (84) for detecting the phase difference between said digital signal representative of the analog input signal and said digital data signal; and
b) time-adjusting means (82; 82, 182) for adjusting the time difference between said digital signal representative of the analog input signal and said digital data signal representative of said digital input signal in response to a corresponding output of said phase difference detection means (84).

5. The apparatus as claimed in claim 4, wherein said phase difference detection means (84) comprises:
a) first peak instant detecting means (89a) for detecting instance of a first peak of said output of said A/D converter for a given interval;
b) second peak instant detecting means (89b) for detecting instant of a second peak of said digital data for said given interval; and
c) time difference measuring means (91) responsive to said detected instant of said first and second peak for producing said output of said phase difference detection means.

6. The apparatus as claimed in claims 1 or 2, further comprising:
a) peak value difference detection means (84) for detecting peak value difference between said digital signal representative of the analog input signal and said digital data signal; and
b) a variable gain amplifier (83) for amplifying said analog input signal with a gain determined by the output (843) of said peak value difference detection means (84).

7. The apparatus as claimed in claim 6, wherein said peak value difference detection means (84) comprises:
a) first peak level detecting means responsive to said digital signal representative of the analog input signal;
b) second peak level detecting means responsive to said digital data; and
c) a subtractor responsive to said first and second peak level detecting means for producing said output of said peak difference detection means.

8. The apparatus as claimed in claim 1 or 2, further comprising:
a) signal correlation detection means (84) responsive to said output of said A/D converter (11) and said digital data signal for detecting correlation between said output of said A/D converter and said digital data signal; and
b) a muting circuit (31) responsive to said output of said digital correlation detection means (84) in order to produce a muted signal to be recorded when no correlation exists between the output of the A/D converter (11) and said digital data, i.e. these signals are different.

## Patentansprüche

1. Datenaufzeichnungsvorrichtung, umfassend:
einen ersten Eingang (90), der mit einem A/D-Wandler (11) verbunden ist, um ein analoges Eingangssignal in ein digitales Signal umzuwandeln, das das analoge Eingangssignal darstellt;
einen zweiten Eingang (20), der mit einem digitalen Decodierer (21) verbunden ist, um ein digitales Eingangssignal zu decodieren und somit ein digitales Datensignal und ein Synchronisiersignal zu erhalten;
ein Synchronisierfehlerdetektionsmittel (24), um einen Synchronisierfehler durch Vergleich zwischen dem Synchronisiersignal und einem Referenzsynchronisiersignal zu detektieren, welches auch dem Synchronisierfehlerdetektionsmittel (24) zugeführt wird;
ein Auswahlmittel (30), das auf ein jeweiliges Steuersignal von einem Steuermittel (40) anspricht, um eine Aufzeichnung des digitalen Datensignals auszuwählen, wenn von dem Synchronisierfehlerdetektionsmittel (24) kein Synchronisierfehler detektiert wird, und um eine Aufzeichnung des digitalen Datensignals zu verhindern, wenn von dem Synchronisierfehlerdetektionsmittel (24) ein Synchronisierfehler detektiert wird;
dadurch gekennzeichnet, daß
bei dem Vorhandensein eines Synchronisierfehlers das Steuermittel (40) auf einen Ausgang des Synchronisierfehlerdetektionsmittels (24) anspricht, um automatisch ein Steuersignal zu erzeugen, das veranlaßt, daß das Auswahlmittel (30) das digitale Signal, welches das analoge Eingangssignal darstellt, zur Aufzeichnung auswählt, so lange der Synchronisierfehler vorhanden ist.

2. Vorrichtung nach Anspruch 1, wobei der digitale Decodierer (21) zum Decodieren des digitalen Eingangssignals auch ein Untercode-Signal erhält; und wobei die Vorrichtung ferner ein Detektionsmittel (22) umfaßt, das auf das Untercode-Signal anspricht, um ein Kopiersteuersignal zu detektieren, das die Erlaubnis und das Verbot des Aufzeichnens mit dem digitalen Eingangssignal anzeigt; und wobei das Steuermittel (40) auch auf das detektierte Kopiersteuersignal anspricht, um automatisch das Steuersignal zu erzeugen und somit zu veranlassen, daß das Auswahlmittel (30) das digitale Signal, welches das analoge Eingangssignal darstellt, zur Aufzeichnung auswählt, solange das Verbot detektiert wird.

3. Vorrichtung nach Anspruch 1 oder 2, ferner umfassend:
a) ein Polaritätsdifferenzdetektionsmittel (84), um eine Polaritätsdifferenz zwischen dem digitalen Signal, das das analoge Eingangssignal darstellt, und dem digitalen Datensignal zu detektieren; und
b) ein Polaritätsänderungsmittel (81), um die Polarität des digitalen Signals, das das analoge Eingangssignal darstellt, in Ansprechen auf einen entsprechenden Ausgang des Polaritätsdifferenzdetektionsmittels (84) zu ändern.

4. Vorrichtung nach Anspruch 1 oder 2, ferner umfassend:
a) ein Phasendifferenzdetektionsmittel (84), um die Phasendifferenz zwischen dem digitalen Signal, das das analoge Eingangssignal darstellt, und dem digitalen Datensignal zu detektieren; und
b) Zeiteinstellungsmittel (82; 82, 182), um die Zeitdifferenz zwischen dem digitalen Signal, das das analoge Eingangssignal darstellt, und dem digitalen Datensignal, das das digitale Eingangssignal darstellt, in Ansprechen auf einen entsprechenden Ausgang des Phasendifferenzdetektionsmittels (84) einzustellen.

5. Vorrichtung nach Anspruch 4, wobei das Phasendifferenzdetektionsmittel (84) umfaßt:
a) ein erstes Spitzenmomentdetektionsmittel (89a), um den Moment einer ersten Spitze des Ausgangs des A/D-Wandlers für ein gegebenes Intervall zu detektieren;
b) ein zweites Spitzenmomentdetektionsmittel (89b), um den Moment einer zweiten Spitze der digitalen Daten für das gegebene Intervall zu detektieren; und
c) ein Zeitdifferenzmeßmittel (91), das auf den detektierten Moment der ersten und zweiten Spitze anspricht, um den Ausgang des Phasendifferenzdetektionsmittels zu erzeugen.

6. Vorrichtung nach Anspruch 1 oder 2, ferner umfassend:
a) ein Spitzenwertdifferenzdetektionsmittel (84), um eine Spitzenwertdifferenz zwischen dem digitalen Signal, das das analoge Eingangssignal darstellt, und dem digitalen Datensignal zu detektieren; und
b) einen Verstärker mit variabler Verstärkung (83), um das analoge Eingangssignal mit einer Verstärkung zu verstärken, die durch den Ausgang (843) des Spitzenwertdifferenzdetektionsmittels (84) bestimmt wird.

7. Vorrichtung nach Anspruch 6, wobei das Spitzenwertdifferenzdetektionsmittel (84) umfaßt:
a) ein erstes Spitzenpegeldetektionsmittel, das auf das digitale Signal anspricht, das das analoge Eingangssignal darstellt;
b) ein zweites Spitzenpegeldetektionsmittel, das auf die digitalen Daten anspricht; und
c) einen Subtrahierer, der auf die ersten und zweiten Spitzenpegeldetektionsmittel anspricht, um den Ausgang des Spitzendifferenzdetektionsmittels zu erzeugen.

8. Vorrichtung nach Anspruch 1 oder 2, ferner umfassend:
a) ein Signalkorrelationsdetektionsmittel (84), das auf den Ausgang des A/D-Wandlers (11) und das digitale Datensignal anspricht, um eine Korrelation zwischen dem Ausgang des A/D-Wandlers und dem digitalen Datensignal zu detektieren; und
b) ein Stummabstimmungsschaltkreis (31), der auf den Ausgang des digitalen Korrelationsdetektionsmittels (84) anspricht, um ein Stummabstimmungssignal zu erzeugen, das aufzuzeichnen ist, wenn keine Korrelation zwischen dem Ausgang des A/D-Wandlers (11) und dem digitalen Datensignal vorhanden ist, d.h. diese Signale unterschiedlich sind.

## Revendications

1. Appareil d'enregistrement de données comprenant
une première entrée (90) reliée à un convertisseur analogique vers numérique (11) destiné à convertir un signal d'entrée analogique en un signal numérique représentatif du signal d'entrée analogique,
une seconde entrée (20) reliée à un décodeur numérique (21) destinée à décoder un signal d'entrée numérique afin d'obtenir un signal de données numériques et un signal de synchronisation,
un moyen de détection d'erreur de synchronisation (24) destiné à détecter une erreur de synchronisation grâce à la comparaison entre ledit signal de synchronisation et un signal de synchronisation de référence également appliqué au moyen de détection d'erreur de synchronisation (24),
un moyen de sélection (30) répondant à un signal de commande respectif provenant d'un moyen de commande (40)-, de manière à sélectionner pour l'enregistrement ledit signal de données numériques, lorsqu'aucune erreur de synchronisation n'est détectée par ledit moyen de détection d'erreur de synchronisation (24) et de manière à empêcher l'enregistrement dudit signal de données numériques lorsqu'une erreur de synchronisation est détectée par ledit moyen de détection d'erreur de synchronisation (24),
caractérisé en ce que
en présence d'une erreur de synchronisation, ledit moyen de commande (40) répond à une sortie dudit moyen de détection d'erreur de synchronisation (24) de manière à produire automatiquement un signal de commande qui amène ledit moyen de sélection (30) à sélectionner ledit signal numérique représentatif du signal d'entrée analogique pour l'enregistrement, tant que ladite erreur de synchronisation est présente.

2. Appareil selon la revendication 1,
dans lequel ledit décodeur numérique (21) destiné à décoder ledit signal d'entrée numérique obtient également un signal de sous-code, et dans lequel l'appareil comprend en outre un moyen de détection (22) répondant audit signal de sous-code afin de détecter un signal de commande de copie indicatif d'une autorisation et d'une interdiction de l'enregistrement avec ledit signal d'entrée numérique, et dans lequel ledit moyen de commande (40) répond également audit signal de commande de copie détecté afin de produire automatiquement ledit signal de commande pour amener ledit moyen de sélection (30) à sélectionner ledit signal numérique représentatif du signal d'entrée analogique pour l'enregistrement, tant qu'une interdiction est détectée.

3. Appareil selon la revendication 1 ou 2, comprenant en outre :
a) un moyen de détection de différence de polarité (84) destiné à détecter une différence de polarité entre le signal numérique représentatif du signal d'entrée analogique et ledit signal de données numériques, et
b) un moyen de changement de polarité (81) destiné à changer une polarité dudit signal numérique représentatif du signal d'entrée analogique, en réponse à une sortie correspondante dudit moyen de détection de différence de polarité (84).

4. Appareil selon la revendication 1 ou 2, comprenant en outre :
a) un moyen de détection de différence de phase (84) destiné à détecter la différence de phase entre ledit signal numérique représentatif du signal d'entrée analogique et ledit signal de données numériques, et
b) un moyen d'ajustement de temps (82 ; 82, 182) destiné à ajuster la différence de temps entre ledit signal numérique représentatif du signal d'entrée analogique et ledit signal de données numériques représentatif dudit signal d'entrée numérique en réponse à une sortie correspondante dudit moyen de détection de différence de phase (84).

5. Appareil selon la revendication 4, dans lequel ledit moyen de détection de différence de phase (84) comprend :
a) un premier moyen de détection d'instant de crête (89a) destiné à détecter l'instant d'apparition d'une première crête de ladite sortie dudit convertisseur analogique vers numérique pendant un intervalle de temps donné,
b) un second moyen de détection d'instant de crête (89b) destiné à détecter l'instant d'apparition d'une seconde crête desdites données numériques pendant ledit intervalle de temps donné, et
c) un moyen de mesure de différence de temps (91) répondant audit instant détecté d'apparition de ladite première et de ladite second crêtes afin de produire ladite sortie dudit moyen de détection de différence de phase.

6. Appareil selon les revendications 1 ou 2, comprenant en outre :
a) un moyen de détection de différence de valeur de crête (84) destiné à détecter une différence de valeur de crête entre ledit signal numérique représentatif du signal d'entrée analogique et ledit signal de données numériques, et
b) un amplificateur à gain variable (83) destiné à amplifier ledit signal d'entrée analogique avec un gain déterminé par la sortie (843) dudit moyen de détection de différence de valeur de crête (84).

7. Appareil selon la revendication 6, dans lequel ledit moyen de détection de différence de valeur de crête (84) comprend :
a) un premier moyen de détection de niveau de crête répondant audit signal numérique représentatif du signal d'entrée analogique,
b) un second moyen de détection de niveau de crête répondant auxdites données numériques, et
c) un soustracteur répondant auxdits premier et second moyens de détection de niveau de crête afin de produire ladite sortie dudit moyen de détection de différence de crête.

8. Appareil selon la revendication 1 ou 2, comprenant en outre :
a) un moyen de détection de corrélation des signaux (84) répondant à ladite sortie dudit convertisseur analogique vers numérique (11) et audit signal de données numériques afin de détecter une corrélation entre ladite sortie dudit convertisseur analogique vers numérique et ledit signal de données numériques, et
b) un circuit de silencieux (31) répondant à ladite sortie dudit moyen de détection de corrélation numérique (84) de manière à produire un signal rendu silencieux devant être enregistré lorsqu'aucune corrélation n'existe entre la sortie du convertisseur analogique vers numérique (11) et lesdites données numériques, c'est-à-dire lorsque ces signaux sont différents.
